(19) Europäisches Patentamt / European Patent Office / Office européen des brevets

(11) **EP 1 744 496 B1**

(12) **EUROPEAN PATENT SPECIFICATION**

(45) Date of publication and mention
of the grant of the patent:
**10.03.2010 Bulletin 2010/10**

(51) Int Cl.:
**H04L 12/56** *(2006.01)*

(21) Application number: **05015419.4**

(22) Date of filing: **15.07.2005**

(54) **Control of background transfers**

Übertragungssteuerung von Hintergrunddaten

Contrôle de transfert de données de fond

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**17.01.2007 Bulletin 2007/03**

(73) Proprietor: **Microsoft Corporation**
**Redmond, WA 98052 (US)**

(72) Inventors:
• **O'Shea, Gregory F. G.,**
**Microsoft Research Ltd.**
**Cambridge CB3 0FB (GB)**
• **Gunawardena, Dinan Srilal,**
**Microsoft Research Ltd.**
**Cambridge CB3 0FB (GB)**
• **Massoulie, Laurent,**
**Microsoft Research Ltd.**
**Cambridge CB3 0FB (GB)**
• **Black, Richard John,**
**Microsoft Research Ltd.**
**Cambridge CB3 0FB (GB)**
• **Key, Peter,**
**Microsoft Research Ltd.**
**Cambridge CB3 0FB (GB)**

(74) Representative: **Free, Rachel Alder**
**Olswang LLP**
**90 High Holborn**
**London**
**WC1V 6XX (GB)**

(56) References cited:
**US-A1- 2002 010 775**

• **G. HASEGAWA ET AL.: "Receiver-based management scheme of access link resources for QoS-controllable TCP connections" PROCCEDINGS OF SOFTCOM2004, October 2004 (2004-10), pages 1-5, XP002353981**
• **P. KEY ET AL.: "Emulating low-priority transport at the application layer: a background transfer service" SIGMETRICS PERFORMANCE 2004, June 2004 (2004-06), pages 118-129, XP002353982 usa**
• **SEMKE J ET AL: "AUTOMATIC TCP BUFFER TUNING" COMPUTER COMMUNICATION REVIEW, ASSOCIATION FOR COMPUTING MACHINERY. NEW YORK, US, vol. 28, no. 4, October 1998 (1998-10), pages 315-323, XP000914445 ISSN: 0146-4833**

**Description**

BACKGROUND

Different communications across a network can have different levels of priority depending on the purpose of the communication. Typically user operations such as file access, email access and web services are considered of higher priority than background operations such as downloading program updates, synchronizing application data and backing up local files. The user operations are considered higher priority because delays in the traffic are noticeable to the user and may lead to pauses in operations, whilst the background operations require little or no user interaction and therefore a user is unlikely to notice any delays. The higher priority communications are referred to herein as 'foreground transfers' whilst the lower priority communications are referred to as 'background transfers'.

When a network becomes busy or a foreground transfer requires more bandwidth, it is beneficial if the background transfers back-off and reduce their bandwidth so that the foreground transfers are given priority. Ideally the background operations should not impact the foreground transfers at all.

Some approaches have been proposed for managing background transfers, however, typically these require special intelligence in the network to achieve the bandwidth management of the background transfer. This requirement limits the applicability of the approaches to only those networks where the special intelligence is available.

Other approaches that have been proposed consider only the capabilities of the user's system but such approaches cannot take into account the effect of transfers between other nodes in the network or of bandwidth constraints in the network itself.

A paper by G. Hasegawa et al entitled "Receiver Based Management Scheme of Access Link Resources for QoS Controllable TCP Connections" published in the Proceedings of SoftCom 2004 (2004-10, pages 1-5) describes a management scheme for access link resources in which the total amount of the receiver socket buffer assigned to TCP connections is adjusted to avoid congestion at the access network.

The paper "Automatic TCP Buffer tuning" published in the Computer Communication Reviews. vol.24, nr.8 of October 1998, discloses the basic approach for TCP buffer resizing.

A paper by P. Key et al entitled "Emulating Low Priority Transport at the Application Layer: A Background Transfer Service" published in Sigmetrics Performance 2004 (2004-06, pages 118 to 129) describes an application level approach to designing a low priority service in which a receive window control is used to limit the transfer rate of the application.

US patent US 2002/010775 describes methods and apparatus for selecting advertisements and other information from a computer network database based on user defined preferences and transmitting the selected advertisement in background mode over a communications link between the computer network and a local computer with minimal interference with other processes communicating over the communications link. This method includes monitoring the communications link and transmitting portions of the advertisement when the communications link line utilisation is below a preestablished threshold.

SUMMARY

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.

A first aspect provides a method of controlling a background transfer in a network comprising: obtaining congestion information relating to the network; and characterised by: determining a target amount of data to be read in a time interval from a buffer at a receiving node connected to the network based on the congestion information; and reading up to a maximum of the target amount of data from the buffer in the time interval, wherein the data is associated with the transfer and the network operates a flow control mechanism and wherein the step of determining the target amount of data to be read comprises:

if the congestion information indicates a decrease in congestion in the network, increasing the target amount of data to be read in a time interval compared to a previous time interval; and
if the congestion information indicates an increase in congestion in the network, decreasing the target amount of data to be read in a time interval compared to a previous time interval.

A second aspect provides one or more device-readable media with device-executable instructions for performing the steps of: obtaining congestion information relating to a network; and characterised by: determining a target amount of data to be read in a time interval from a buffer at a receiving node connected to the network based on the congestion information; and reading up to a maximum of the target amount of data from the buffer in the time interval, wherein the network operates a flow control mechanism and the data is associated with a background transfer and wherein the step of determining the target amount of data to be read comprises:

if the congestion information indicates a decrease in congestion in the network, increasing the target amount of data to be read in a time interval compared to a previous time interval; and
if the congestion information indicates an increase in congestion in the network, decreasing the target amount of data to be read in a time interval compared to a previous time interval.

A third aspect provides a receiving apparatus comprising: a buffer; a processor arranged to obtain congestion information relating to a network and to determine a target amount of data to be read in a time interval from the buffer based on the congestion information; and a receiver arranged to read up to a maximum of the target amount of data from the buffer in the time interval, wherein the data is associated with a background transfer and the network operates a flow control mechanism and wherein the step of determining the target amount of data to be read comprises:

if the congestion information indicates a decrease in congestion in the network, increasing the target amount of data to be read in a time interval compared to a previous time interval; and
if the congestion information indicates an increase in congestion in the network, decreasing the target amount of data to be read in a time interval compared to a previous time interval.

An advantage of the methods described above is that where it is determined that the network has become more congested and therefore it may be assumed that the congestion is caused by a data flow competing with the particular transfer, the amount of data to be read from the buffer can be reduced, thereby backing-off the particular transfer and releasing network capacity to the competing flow. Similarly, where it is determined that the network has become less congested, it may be assumed that this is caused by a competing flow stopping. Consequently the amount of data to be read from the buffer can be increased.

The methods described may be performed by software in machine readable form on a storage medium.

The scope of protection of the present application is as specified in the appended claims.

This acknowledges that software can be a valuable, separately tradable commodity. It is intended to encompass software, which runs on or controls "dumb" or standard hardware, to carry out the desired functions, (and therefore the software essentially defines the functions of the register, and can therefore be termed a register, even before it is combined with its standard hardware). For similar reasons, it is also intended to encompass software which "describes" or defines the configuration of hardware, such as HDL (hardware description language) software, as is used for designing silicon chips, or for configuring universal programmable chips, to carry out desired functions.

Many of the attendant features will be more readily appreciated as the same becomes better understood by reference to the following detailed description considered in connection with the accompanying drawings.

DESCRIPTION OF THE DRAWINGS

The present description will be better understood from the following detailed description read in light of the accompanying drawings, wherein:

FIG. 1 is a schematic diagram of a communications network;
FIG. 2 is an example flow diagram of a method of controlling background transfers;
FIG. 3 is a schematic diagram showing the contents of a buffer during the operation of the flow diagram of FIG. 2; and
FIG. 4 and FIG. 5 show a more detailed example flow diagram of a method of controlling background transfers.

Like reference numerals are used to designate like parts in the accompanying drawings.

DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

Although the present examples are described and illustrated herein as being implemented in TCP/IP, this is by way of an example only and is not a limitation. As those skilled in the art will appreciate, the present examples are suitable for application in a variety of different protocols that are connection oriented and include a flow control mechanism (e.g. Stream Control Transmission Protocol, SCT as described in RFC2960).

The term "flow control mechanism" is used here to refer to communications protocol methods which have the purpose of preventing a receiver from being overrun with data when an associated transmitter is able to send data faster, or in greater quantity, than the receiver can consume them.

A summary of the flow control mechanism of TCP is now given for ease of reference although full details of this flow control mechanism are known to the skilled person in the art and are available in the IETF RFC 793.

As mentioned above TCP is a connection-oriented protocol; that is two nodes in a communications network must establish a TCP connection with one another before they can exchange data using TCP. Each end of a TCP connection has a finite amount of buffer space. A receiving TCP only allows the other end to send as much data as the receiver has buffers for. This prevents a fast host from overflowing the buffers on a slow host. TCP's flow control is provided by each end advertising a window size. This is the number of bytes, starting with the one specified by the acknowledgement number field, that the receiver is willing to accept. A sliding window method is used to enable the flow control mechanism. In high level terms, this window can be thought of as closing when data is sent and acknowledged. The window is considered to open when the receiving process reads acknowledged data, freeing up space in its TCP receive buffer. This allows more data to be sent. The window can also be considered to shrink. When the window shrinks to become a zero window then the sender is prevented from transmitting any data. In that case, the buffers at the receiver are full; the receiver advertises a zero window and the sender stops transmitting more data. If the receiver later empties its buffers (at least partially) a window update (which is a type of ACK message) is sent advertising that the receiver can now receive a specified number of bytes. This window update message does not acknowledge any new data, it just opens the window.

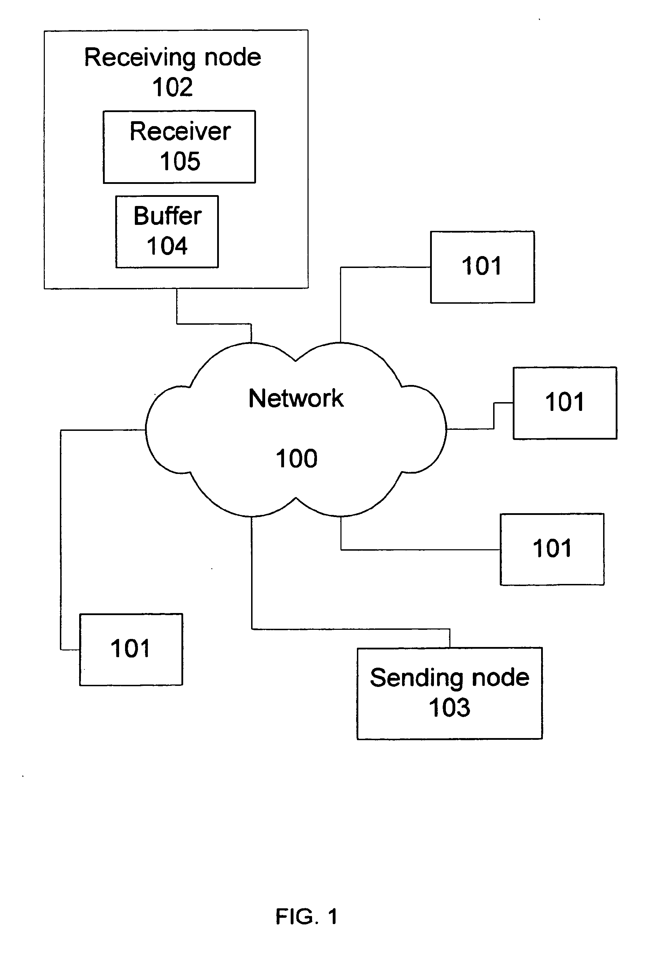

FIG. 1 is a schematic diagram of a communications network. A network 100 connects many nodes 101, 102, 103 to each other and to other communications networks (not shown). The network may be any suitable network such as the internet, a local area network, a wide area network, an intranet or other network. By way of example, one node 102, which may be a PC, is referred to as the receiving node and is to receive a background transfer (e.g. a program update) from another node 103, referred to as the sending node, which may be a network server. At the same time as the background transfer of data from the sending node 103 to the receiving node 102, there may be many other operations, both foreground and background transfers, between the nodes 101, 102, 103. The receiving node 102 includes a buffer 104 associated with the background connection and a receiver 105 which can read data out of the buffer and pass it to other functional elements, such as a processor, within the receiving node (not shown). The receiving node 102 operates with its buffer 104 at close to capacity and when the buffer becomes full, the flow control protocols operating in the network cause the sending node 103 to stop sending data to the receiving node 102.

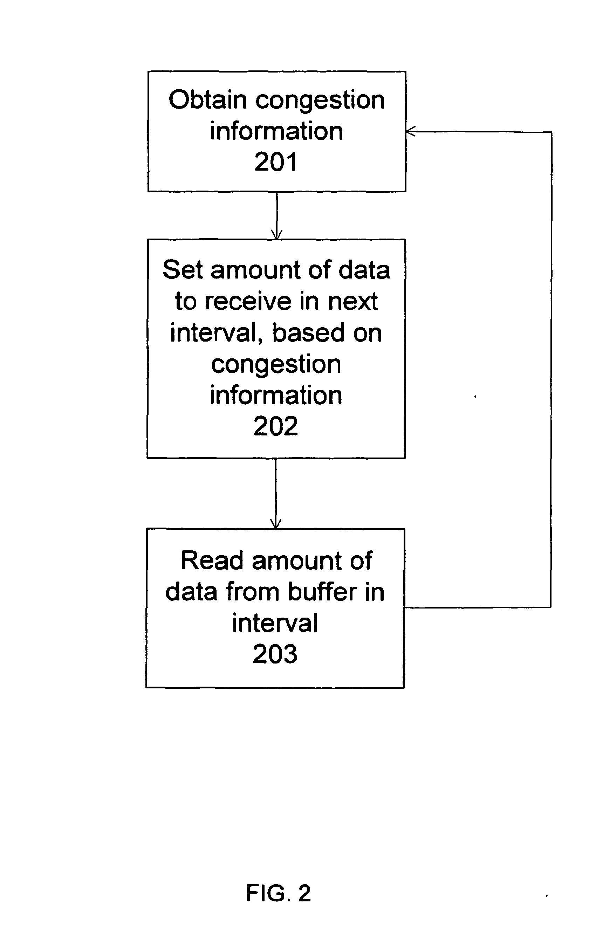

The operation of the receiving node 102 can be described with reference to the flow diagram in FIG. 2. The receiving node obtains information on the congestion of the network (step 201). This information may be provided by the network (e.g. via an explicit congestion notification, ECN) or may be inferred based on measurement or calculation of network parameters (e.g. round trip time, RTT). The congestion information must be sufficiently timely to ensure that the background transfer rate can be controlled in a reasonable time frame, such that any affects on higher priority traffic are minimized. Based on the congestion information obtained (in step 201), the receiving node 102 sets the amount of data that the receiver 105 will accept from the buffer 104 in the next time interval (step 202). This setting step 202 may include a comparison of the current congestion information with previously obtained information on network congestion, such that the receiving node 102 can determine whether the network is becoming more or less congested.

Having set the amount of data (in step 202), this amount of data is then read by the receiver 105 from the buffer 104 in the following time interval (step 203). Once the set amount of data has been read from the buffer, the receiver stops reading information from the buffer for the remainder of the time interval. The sending node 103 may continue to send data to the receiving node 102 until the buffer 104 becomes full and at this point the flow control protocol in the network will stop the sending node 103 from sending any more data to the receiving node 102. These steps are then repeated for successive time intervals.

Where the receiving node determines that the network has become more congested, the receiving node assumes that the congestion is caused by a data flow competing with the background transfer that it is receiving. Consequently, the receiving node needs to cause the background transfer to back-off to alleviate the congestion, and therefore the amount of data set to be received (in step 202) will be reduced compared to that received in the previous interval.

Where instead the receiving node determines that the network has become less congested, the receiving node assumes that a competing flow has stopped and therefore that there is more available bandwidth for the background transfer, without impacting any higher priority transfers which are also occurring in the network. Consequently, the receiving node can increase the amount of data set to be received (in step 202) compared to that received in the previous interval.

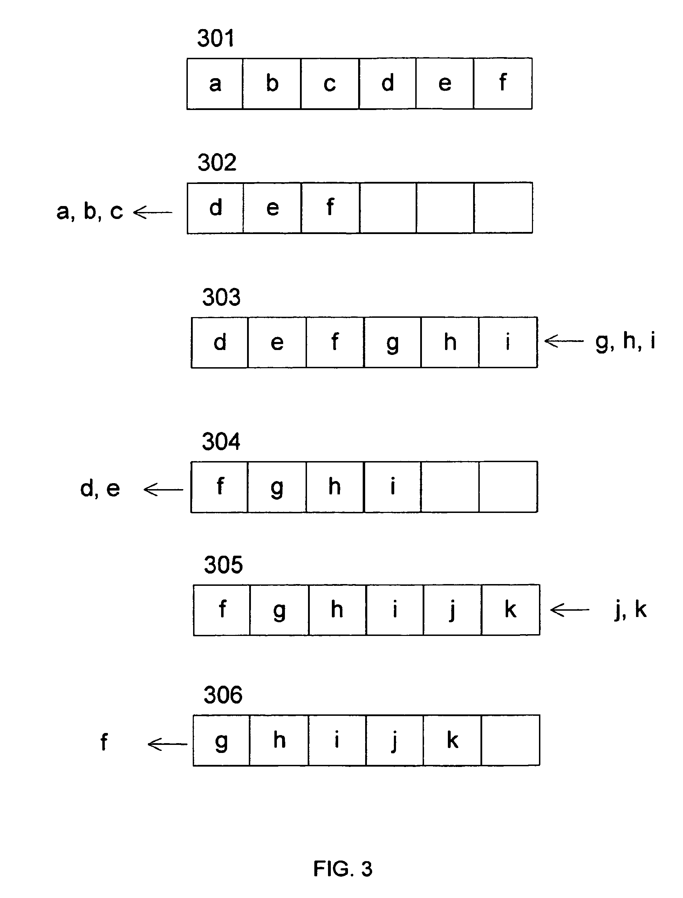

A simplified schematic diagram showing the contents of the buffer 104 over several time intervals is shown in FIG. 3. At the start of the sequence the buffer, which has capacity for 6 blocks of data, is full (step 301). As a result of this, the flow control in the network will have stopped the sending node 103 from sending data. The receiving node sets the amount of data to be read from the buffer in time interval 1 to be 3 blocks, and the receiver reads 3 blocks (blocks a-c) which leaves 3 empty spaces in the buffer (step 302). The flow control mechanism therefore allows the sending node to send data until the buffer is full again (step 303). The receiving node then determines (from congestion information) that the congestion in the network has increased, so it reduces the amount of data to be read in time interval 2 to be 2 blocks (blocks d-e) leaving two spaces (step 304) which can then be filled by the sending node (step 305). The receiving node again checks on the congestion of the network and again determines that the congestion has increased, so the amount of data to be read in time interval 3 is set to be 1 block (block f) leaving 1 empty space (step 306) and therefore the sending node can only send one block of data to the receiving node before the buffer becomes full. It can be seen from FIG. 3 that as the receiving node detects increasing congestion in the network, the amount of data transferred as part of the background transfer is reduced and therefore the network capacity is released in favour of the other traffic, which may be more important foreground transfers.

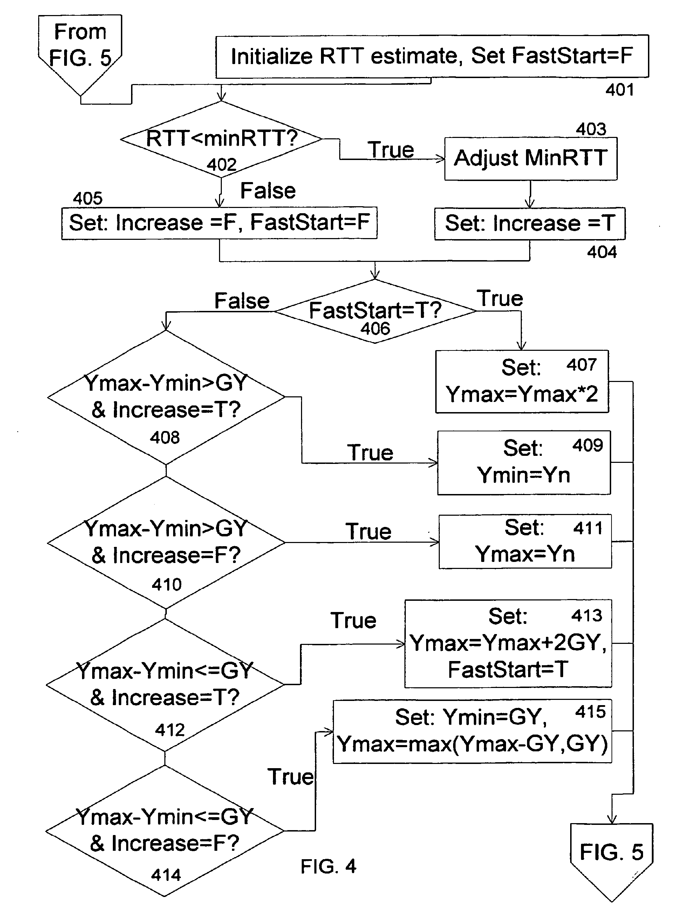

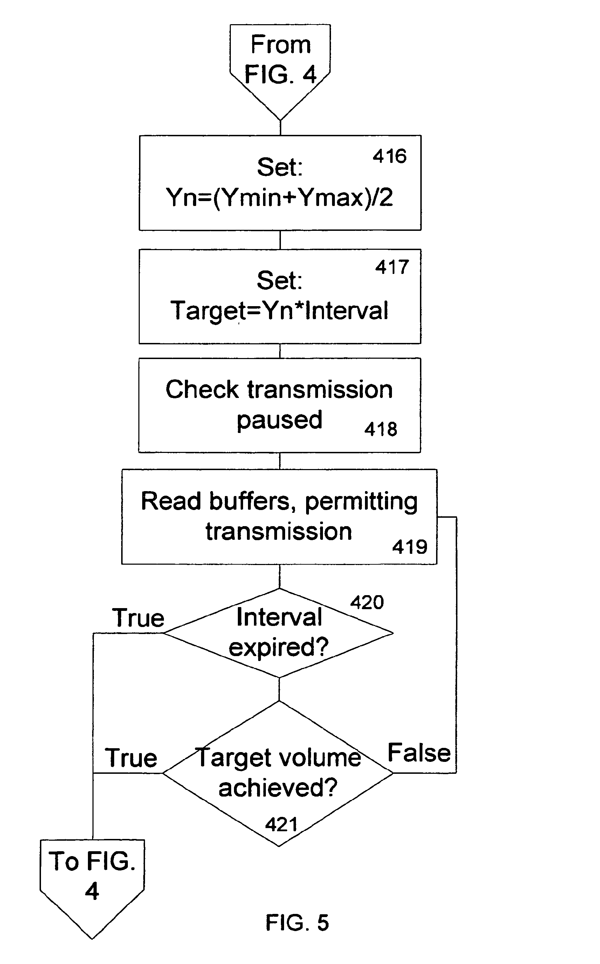

A more detailed example of the operation of the receiving node is shown in the flow diagram in FIG. 4 and FIG. 5 where round trip time (RTT) is used to infer information on the congestion in the network. TCP/IP is used by way of example. The operation relies on a number of variables:

FastStart: This is used to enable a fast increase in the background transfer rate when a competing flow disappears, as detailed below. The variable has two possible values, True (T) or False (F).

Increase: This variable determines whether the target rate of reading data from the buffer is increased or decreased. The variable has two possible values, True or False.

GY: A control parameter.

RTT: The RTT estimate for the current time interval.

MinRTT: The minimum value of RTT for the connection.

Ymin: The minimum value for the target rate of reading data from the buffer.

Ymax: The maximum value for the target rate of reading data from the buffer.

Yn: The present target rate of reading data from the buffer.

Interval: Length of a time interval (also referred to as a control interval).

Target: Target amount of data to read in a time interval.

The length of the time interval ('Interval') is chosen to suit the characteristics of the network and the desired properties of the connection in question (for example, to favour short-term reaction over long-term stability). The length of the interval may be selected from a table based on the speed of the connection to the network (e.g. 1 Mbps and below, 1-500 Mbps, 500 Mbps and above) and the operating system of the computer (e.g. Windows 95/98, Windows 2000, Windows XP). Alternatively the length of the interval may be set to achieve a fixed number of samples in that interval (based on the rate calculation detailed below).

The control parameter, GY, establishes the minimum and incremental rates of change of the target rate and may be set according to experience or policy. Non-zero values of GY may be chosen to avoid starvation of the sending node and typically it is set equal to 2*MSS over the control interval, where MSS is the Maximum Segment Size for the connection. This value of GY is chosen in order to avoid conflicting with TCP delayed acknowledgements.

The receiving node initializes itself by obtaining an estimate of the network RTT between itself and the sending node (step 401). This estimate may be obtained for example by using a RTT estimate calculated for a TCP flow. Any suitable RTT estimating or measuring technique may be used. Known techniques include sending test packets or use of special markers in packets. A new method of estimating RTT is described below. As part of the initialization step (step 401) the variable 'FastStart' is also set to False (F).

The current RTT estimate is then compared against the estimate of the minimum RTT (MinRTT) for the connection in order to determine whether the current RTT is less than the minRTT (step 402). Where the process has just started, the initial value of the minimum RTT may be set as equal to the first RTT estimate. If the current value of the RTT is less than MinRTT then the value of MinRTT is adjusted so that it equals the current value of RTT (step 403) and the 'Increase' variable is set to True (T, step 404). If the current RTT is more than MinRTT, then Increase is set equal to False (F) and FastStart is set equal to False (step 405).

The value of FastStart is checked (step 406) and if True, the value of Ymax is increased by a factor of two (step 407). This will have the result that the target amount of data to be read in the time interval will be increased rapidly. If however FastStart equals False, one of four conditions apply and depending on which applies, the values of Ymax and / or Ymin are changed, as shown in the following table.

| Steps | Value of Ymax - Ymin | Value of Increase | New Ymin | New Ymax |
|---|---|---|---|---|
| 408, 409 | > GY | T | Yn | Ymax |

(continued)

| Steps | Value of Ymax - Ymin | Value of Increase | New Ymin | New Ymax |
|---|---|---|---|---|
| 410, 411 | > GY | F | Ymin | Yn |
| 412, 413 | <= GY | T | Ymin | Ymax + 2GY |
| 414, 415 | <= GY | F | GY | max (Ymax-GY, GY) |

A new value of Yn is then calculated as the average of the new Ymax and Ymin values (step 416 in FIG. 5) and the target amount of data to be read in the time interval is calculated from the new value of Yn and the value of Interval (step 417). The next step (step 418) is an optional precaution which checks that the transmission of data from the sending node to the receiving node has been paused by the network flow control protocol. This can be achieved by checking that the buffer 104 is full.

The receiver then starts reading data from the buffer (step 419), which then enables the sending node to start sending more data because the buffer is no longer full and data is read until either the interval expires (step 420) or the target volume is achieved (step 421) when the receiver pauses the reading of the buffer. Steps 402 to 421 are then repeated for successive time intervals.

It will be appreciated that the equations provided in FIG. 4 are by way of example only and the target rates may be adjusted in different ways to achieve a similar effect.

Another more detailed example of the operation of the receiving node is described below. The defaults and initialization values are provided by way of example only and many parameters used are common to the description above in relation to FIG. 4 and FIG. 5. The static parameters are:

GY: The rate granularity in bytes per millisecond

T: The length of the control interval in milliseconds

$P^T$: A threshold value for small RTT samples, in milliseconds

$\delta$: The smoothing parameter for tracking minimum round trip time, (default = 1/10)

$\epsilon$: The tolerance threshold for deciding whether the background transfer flow interferes with other traffic, (default = 1/10)

The dynamic parameters are:

$Y_n$: The target rate for n-th control interval in bytes per millisecond

$M_n$: The maximum amount of data for the n-th control interval

$B_n$: The number of bytes received during the n-th control interval

R: The minimum RTT in milliseconds

$R_{av}$: A running average of the RTT in milliseconds

$R_{min}$: An estimate of the minimum RTT (distinct from R) in milliseconds

$R_s$: An empirical measurement of RTT during the n-th control interval in milliseconds

$P_n$: A running estimate of fraction of small RTT observed

$X_n$: The receive rate achieved during the n-th control interval in bytes per millisecond

$Y_{min}$: The lower end of the search range

$Y_{max}$: The upper end of the search range

$N_{inc}$: The number of consecutive increases to $Y_{max}$, used to speed up linear increase

The value of R may be obtained from the Window Scaling method (also referred to as BaTS, see below) where the two methods are used in combination, as described below. Otherwise, the value of R may be obtained from historical data over previous control intervals or may be set, at least initially, to a default value.

At the outset the parameters are initialized and example initial values are given below where MSS is the Maximum Segment Size for the TCP connection, typically 1460 bytes.

Yn = 2*MSS/T

GY = 2*MSS/T

$R_{av}$ = R

$M_n$ = 2*MSS

PT = 0.65

As in FIG. 4 and FIG. 5 the search strategy uses a search window $[Y_{min}, Y_{max}]$. At the start of each control interval $Y_n$ is set equal to $(Y_{min} + Y_{max})/2$, a limit is set on the maximum amount of data that is to be received, $M_n$, and the rate at which data is expected to be received, $Y_n$, is determined and rounded up to the nearest 2*MSS / T.

Whenever a sample $R_s$ is obtained, which may happen several times in a single control interval, it is used to update the RTT average, the estimate of the minimum RTT and the estimate of the fraction of small RTT observed, as follows:

$$R_{av} = (1 - \delta)R_{av} + \delta(R_s)$$

$$R_{min} = R_{min} \text{ if } R_s > (1/(1-\epsilon))R_{min}$$

$$R_{min} = (1 - \delta)R_{min} + \delta(R_s) \text{ if } R_s \leq (1/(1-\epsilon))R_{min}$$

$$P_n = P_n \times (1 - \delta) + \delta \times 1 \text{ if } R_s \leq (1/(1-\epsilon))R_{min}$$

$$P_n = P_n \times (1 - \delta) + \delta \times 0 \text{ if } R_s > (1/(1-\epsilon))R_{min}$$

At the end of each control interval the following two tests are run:

$$(1-\epsilon)R_{av} \leq R_{min} \qquad \text{(Test 1)}$$

$$P_n \geq P^T \qquad \text{(Test 2)}$$

If the answer to one or both tests is true, then the expected rate $Y_n$ is increased, otherwise it is reduced.

In practice the disjunction of these two tests proves to be more robust than either test in isolation. Test 1 provides a running average of RTT samples, but this can result in divergence when the true RTT is small but a few large samples are been observed. Test 2 corrects this.

The detailed adaptation of Y is as follows, with the search range $[Y_{min}, Y_{max}]$ being maintained. In the n-th control interval $Y_n$ is set to $(Y_{min} + Y_{max})/2$. Boundaries are initialized at $Y_{min}=0$, $Y_{max}=4*MSS/R$ and granularity parameter, GY, is used.

Case 1:  $Y_{max}$ - $Y_{min}$ > GY and one or both of test 1 and test 2 is true:
  Set $Y_{min}$ = Yn, $N_{inc}$ = 1.
Case 2:  $Y_{max}$ - $Y_{min}$ > GY and test 1 is false and test 2 is false:
  Set $Y_{max}$ = Yn, $N_{inc}$ = 1.
Case 3:  $Y_{max}$ - $Y_{min}$ $\leq$ GY and one or both of test 1 and test 2 is true:
  Set $Y_{max}$ = $Y_{max}$ + $2^{N_{inc}}$ GY, and $N_{inc}$ = $N_{inc}$ + 1.
Case 4:  $Y_{max}$ - $Y_{min}$ $\leq$ GY and test 1 is false and test 2 is false:
  Set $Y_{max}$ = max($Y_{max}$ - GY, GY) and $Y_{min}$ = GY, and $N_{inc}$ = 1.

In another embodiment, the methods described above (referred to herein as the Rate Limiting methods or modes) can be used in combination with a technique which allows an application receiving on a TCP connection to detect the presence of competing connections and to yield bandwidth to them by adjusting its TCP Receive Window. By adjusting the TCP Receive Window the sending node is constrained in terms of the amount of unacknowledged data it can have in transfer at any one time. This technique is referred to as the Background Transfer Service (BaTS) or Window Scaling method and is described in US Patent Application 10/676,772 filed 30 September 2003 and entitled 'Background Transport Service'. This technique is first described in isolation below, followed by description of the combination of Window Scaling and Rate Limiting techniques.

The Receive Window is an original feature of TCP whose essential purpose is flow-control, i.e. to prevent the sender from overrunning the receiver with too much data. BaTS exploits the Receive Window for two further purposes: firstly, by searching for the optimal Receive Window size to enable estimation of the available bandwidth, and secondly to cause throttling at the sender.

BaTS measures the behaviour of a TCP connection, and adjusts itself accordingly, once every control interval, where the duration of a control interval is a parameter chosen to suit the characteristics of the network and the desired properties of the connection in question (for example, to favour short-term reaction over longer-term stability). At each control interval BaTS knows the number of bytes received during the interval and the duration of the interval, from which it calculates the receive rate for the interval. It also knows the current size of the Receive Window. BaTS also tracks two dynamic parameters, namely the Round Trip Time (RTT) and the optimal Receive Window (the smallest Receive Window that does not decrease throughput on the connection). Both the bandwidth and the RTT will vary with changing network conditions.

BaTS searches for the optimal Receive Window by adjusting the Receive Window at every interval in an attempt to bring its search window close to the optimal Receive Window. Simultaneously with this search BaTS maintains its estimate of the minimum RTT based upon the observed delay with which each Receive Window of data was received during the control interval. If the received rate for an interval is less than expected for the current Receive Window size and RTT estimate then BaTS assumes that there is increased competition for the network and reduces the Receive Window for the next control interval. Conversely, if the received rate for an interval is greater than that expected for the current Receive Window size and RTT estimate then BaTS assumes there is reduced competition for the network and increases the Receive Window for the next control interval.

By design BaTS is intended for implementation in the application layer with standard primitives, using only standard socket library calls. In particular the SO_RCVWND argument to the setsockopt and getsockopt calls may be used for managing the Receive Window.

A detailed explanation of BaTS is provided below, which uses the following static parameters:

GW: The window granularity (default 2*MSS)
T: The length of the control interval (default 1000ms)
$\delta$: The smoothing parameter for tracking minimum round trip time (default 0.1)
$\epsilon$: The tolerance threshold for deciding whether the BaTS flow interferes with other traffic (default 0.1)

The following dynamic parameters are also used:

$W_n$: The theoretical Receive Window in the n-th control interval
R: An estimate of the minimum round trip time in milliseconds
$B_n$: The number of bytes received during the n-th control interval $[W]_n$: The actual Receive Window in the n-th control interval
$X_n$: The receive rate achieved during the n-th control interval in bytes per millisecond
$W_{min}$: The lower end of the window search range
$W_{max}$: The upper end of the window search range
$N_{inc}$: The number of consecutive increases to $W_{max}$, used to speed up linear increase

At the outset the dynamic parameters are initialized as follows:

$W_{min} = 2 * MSS$
$W_{max} = 12 * MSS$, this being the default Receive Window on Windows Codename Longhorn

$$W_n = (W_{min} + W_{max}) / 2$$

R = 10000 milliseconds

At the beginning of the n-th control interval, $W_n$ is set equal to $(W_{min} + W_{max})/2$ and the actual receiver window, $[W]_n$, is set to:

$$[W]_n = 2 * MSS \text{ if } W_n \leq 2 * MSS$$

$$[W]_n = k * MSS, \text{ otherwise}$$

where k is the smallest integer such that $W_n \le k * MSS$.

If the inbound connection is constrained by the receiver window, data would be expected to be received at a rate of $W_n/R$, assuming the estimate R of the minimum round-trip time is correct. On the other hand, the received rate over the n-th control interval is $X_n = B_n / T$, also equal to N * MSS / T, where MSS is the Maximum Segment Size used for that TCP connection (typically 1460 bytes) when the N packets received during this control interval had maximum size.

At the end of that interval the following test is performed (irrespective of the stage that the method is in):

$$X_n/[W]_n \ge (1/R)(1-\epsilon) \qquad (\text{Test 3})$$

Initially GW is set to the value of Receive Window, which the application may have changed from the default provided by the TCP protocol driver, and the method sets $[W]_n = W_{min} = W_{max} = GW$. In addition the RTT estimate is set to an artificially high value, R = 10000 milliseconds, in order to cause its immediate re-evaluation during the initialization phase.

The pre-initialization phase comprises a small number of control intervals (default = 3) and during this phase TCP is performing the initial three-way handshake for a new TCP connection, which may be subject to damping at the receiver, obtaining its initial estimate of the RTT on the connection and increasing its congestion window. The pre-initialization phase allows the TCP connection time to reach a steady state so that BaTS can obtain representative measurements of the RTT and rate for the connection.

During the initialization phase proper, test 3 is run at the end of each control interval. If the test succeeds, $W_{max}$ is doubled, R is updated to $W_n/X_n$, and the method remains in the initialization phase. If the test fails, $W_{max}$ is set to max (GW, $W_{max}$ / 2), and the method progresses to the tracking phase.

In the tracking phase, test 3 is also run at the end of the n-th control interval. If this holds, the Receive Window is augmented, that is $W_{n+1} > W_n$, and the estimate R of the round-trip time is updated as follows:

$$R = (1-\delta)R + \delta(W_n / X_n)$$

If not, the Receive Window is lowered, that is $W_{n+1} < W_n$, and the estimate R is not changed.

The details are as follows.

Case 1:    $W_{max}$ - $W_{min}$ > GW and test 3 is true:
        Set $W_{min} = W_n$, $N_{inc} = 1$.

Case 2:    $W_{max}$ - $W_{min}$ > GW and test 3 is false:
        Set $W_{max} = W_n$, $N_{inc} = 1$.

Case 3:    $W_{max}$ - $W_{min}$ ≤ GW and test 3 is true:
        Set $W_{max} = W_{max} + Z^{N_{inc}} GW$, and $N_{inc} = N_{inc} + 1$.

Case 4:    $W_{max}$ - $W_{min}$ ≤ GW and test 3 is false:
        Set $W_{max} = max(W_{max} - GW, GW)$, and $W_{min} = GW$, and $N_{inc} = 1$.

The combination of the two methods, Window Scaling(or BaTS) and Rate Limiting, may be beneficial in some situations where the adjustment of the TCP Receive Window in BaTS cannot achieve the required back-off in background transfer flow due to a conflict with the Silly Window Syndrome avoidance mechanisms of real-world TCP implementations. Silly Window Syndrome (SWS) arises where a receiver advertises and a sender responds to a very small Receive Window size, which can potentially lead to large numbers of tiny packets being exchanged at high frequency and with unacceptable overheads. The critical parameter used by TCP in calculating an efficient unit of data transfer, and hence for detecting a potentially silly Receive Window, is the TCP Maximum Segment Size (MSS), being the maximum amount of data that can be accommodated in a single IP packet over a given connection. In order to avoid SWS and hence to smooth the frequency with which a receiver might advertise a small receive window, and to avoid senders responding with large numbers of small data packets, TCP delays the advertising of small Receive Window at the receiver, and delays the reaction to a small Receive Window at the sender, in anticipation of Receive Window being increased to a more efficient size before the delay is over. Consequently when the Receive Window, as set through BaTS, gets below a certain size, these SWS avoidance techniques prevent the required back-off in the background transfer.

In the event that a Receive Window size is obtained through BaTS which would conflict with TCP Silly Window Syndrome avoidance techniques, i.e. if $W_n \leq 2 * MSS$, then it may be beneficial to immediately suspend the use of the BaTS Window Scaling mode and instead switch to the Rate Limiting mode described.

In a further embodiment, the receiving node may be a passive receiving node, where the term 'passive receiving node' is used here to refer to a receiving node, receiver or destination node which will not be sending data back to an associated transmitter or source node.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

In all the above description, the equations for manipulation of variables are provided by way of example only. It will be apparent to a skilled person that they may be changed in many ways without losing the effect sought.

Any range or device value given herein may be extended or altered without losing the effect sought, as will be apparent to the skilled person.

It will be understood that the above description of a preferred embodiment is given by way of example only and that various modifications may be made by those skilled in the art.

**Claims**

1. A method of controlling low priority transfers, hereafter referred to as background transfers, in a network (100) comprising:

   obtaining congestion information relating to the network;
   and **characterised by**:

      determining a target amount of data to be read in a time interval from a buffer associated to the background transfers (104) at a receiving node (102) connected to the network based on the congestion information; and reading up to a maximum of the target amount of data from the buffer in the time interval, wherein the data is associated with the transfer and the network operates a flow control mechanism; and wherein the step of determining the target amount of data to be read comprises:

         if the congestion information indicates a decrease in congestion in the network, increasing the target amount of data to be read in a time interval compared to a previous time interval; and
         if the congestion information indicates an increase in congestion in the network, decreasing the target amount of data to be read in a time Interval compared to a previous time interval.

2. A method according to claim 1, wherein the method is repeated for successive time intervals.

3. A method according to any of the preceding claims, wherein the congestion information comprises at least one of: round trip time, explicit congestion notification and available network capacity.

4. A method according to any preceding claim, wherein the step of determining the target amount of data to be read further comprises:

   determining if the congestion information indicates a decrease in congestion over a plurality of previous time intervals; and
   if the determination is true, increasing the rate of increase of the target amount of data to be read in a time interval compared to a previous time interval.

5. A method according to any of the preceding claims, further comprising:

   before reading the amount of data from the buffer in the time interval, confirming that the flow control mechanism has paused the transfer.

6. A method according to any of the preceding claims, wherein the flow control mechanism includes advertising a window size and wherein the method is implemented when the window size is less than a threshold size.

7. A method according to claim 6, wherein the window size is a receive window size.

8. A method according to any of claims 1-5, further comprising the steps of:

before the determining step, evaluating available network capacity;
calculating a new receive window size for a subsequent time interval based on the available network capacity; and
if the new receive window size is less then a threshold size, performing the steps of determining and reading; and
if the new receive window size is more than a threshold size, setting a receive window for a subsequent time interval equal to the new receive window size.

9. A method according to any of claims 6-8, wherein the threshold size is equal to twice the Maximum Segment Size.

10. One or more device-readable media with device-executable instructions for performing steps comprising:

obtaining congestion information relating to a network (100);
and **characterized by**:

determining a target amount of data to be read in a time interval from a buffer associated to low priority transfers, hereafter referred to as background transfers (104) at a receiving node (102) connected to the network based on the congestion information; and
reading up to a maximum of the target amount of data from the buffer in the time interval, wherein the network operates a flow control mechanism and the data is associated with a background transfer; and
wherein the step of determining the target amount of data to be read further comprises:

determining if the congestion information indicates a decrease in congestion over a plurality of previous time intervals: and
If the determination is true, increasing the rate of increase of the target amount of data to be read in a time interval compared to a previous time interval.

11. One or more device-readable media with device-executable instructions according to claim 10, wherein the steps further comprise: repeating the steps for successive time intervals.

12. One or more device-readable media with device-executable instructions according to any of claims 10 or 11, wherein the congestion information comprises at least one of: round trip time, explicit congestion notification and available network capacity.

13. One or more device-readable media with device-executable instructions according to claims 10 to 12, wherein the step of determining the target amount of data to be read comprises:

If the congestion information indicates a decrease in congestion in the network, increasing the target amount of data to be read in a time interval compared to a previous time interval; and
if the congestion information indicates an increase in congestion in the network, decreasing the target amount of data to be read in a time interval compared to a previous time interval.

14. One or more device-readable media with device-executable instructions according to any of claims 10-13, wherein the steps further comprise:

before reading the amount of data from the buffer in the time interval, confirming that the flow control mechanism has paused the transfer.

15. A receiving apparatus adapted to control a low priority transfer, hereafter referred to as background transfer (102) comprising:

a buffer associated to the background transfers (104);
a processor arranged to obtain congestion information relating to a network (100) and to determine a target amount of data to be read in a time interval from the buffer based on the congestion information:
and a receiver (105) arranged to read up to a maximum of the target amount of data from the buffer in the time interval, wherein the data is associated with a transfer and the network operates a flow control mechanism; wherein for the determination of the target amount of data to be read the apparatus is arranged to:

if the congestion information indicates a decrease in congestion in the network, increasing the target amount of data to be read in a time interval compared to a previous time interval; and
if the congestion information indicates an increase in congestion in the network, decreasing the target amount of data to be read in a time interval compared to a previous time interval.

16. A receiving apparatus according to claim 15, wherein the processor and the receiver are both arranged to repeat their operations for successive time intervals.


**Patentansprüche**

1. Verfahren zum Steuern von Übertragungen niedriger Priorität (im folgenden als Hintergrundübertragungen bezeichnet) in einem Netzwerk (100), umfassend:

Einholen von Stauungsinformation bezüglich des Netzwerks;
**gekennzeichnet durch**:

anhand der Stauungsinfbrmation Bestimmen einer Zielmenge von Daten, die in einem Zeitintervall aus einem Puffer gelesen werden sollen, der mit den Hintergrundübertragungen (104) an einem Empfangsknoten (102) verbunden ist, der mit dem Netzwerk verbunden ist; und
Lesen bis zu einem Maximum der Zielmenge von Daten aus dem Puffer in dem Zeitintervall, wobei die Daten mit der Übertragung verbunden sind und das Netzwerk einen Flusskontrollmechanismus betreibt; und wobei der Schritt des Bestimmens der Zielmenge von Daten, die gelesen werden sollen, umfasst:

falls die Stauungsinformation ein Abnehmen von Stauung in dem Netzwerk anzeigt, Erhöhen der Zielmenge von Daten, die in einem Zeitintervall gelesen werden sollen, verglichen mit einem vorherigen Zeitintervall; und
falls die Stauungsinformation ein Ansteigen von Stauung in dem Netzwerk anzeigt, Verringern der Zielmenge von Daten, die in einem Zeitintervall gelesen werden sollen, verglichen mit einem vorherigen Zeitintervall.

2. Verfahren nach Anspruch 1, **dadurch gekennzeichnet, dass** das Verfahren für aufeinanderfolgende Zeitintervalle wiederholt wird.

3. Verfahren nach einem der vorangehenden Ansprüche, **dadurch gekennzeichnet, dass** die Stauungsinformation Roundtrip-Zeit und/oder ausdrückliche Stauungsbenachrichtigung und/oder zur Verfügung stehende Netzwerkkapazität umfasst.

4. Verfahren nach einem der vorangehenden Ansprüche, **dadurch gekennzeichnet, dass** der Schritt des Bestimmens der Zielmenge von Daten, die gelesen werden sollen, ferner umfasst:

Bestimmen, ob die Stauungsinformation eine Abnahme von Stauung gegenüber einer Vielzahl von vorherigen Zeitintervallen anzeigt; und
falls die Bestimmung wahr ist, Erhöhen der Rate des Erhöhens der Zielmenge von Daten, die in einem Zeitintervall gelesen werden sollen, verglichen mit einem vorherigen Zeitintervall.

5. Verfahren nach einem der vorangehenden Ansprüche, ferner umfassend:

vor dem Lesen der Menge der Daten aus dem Puffer in dem Zeitintervall Bestätigen, dass der Flusskontrollmechanismus die Übertragung ausgesetzt hat.

6. Verfahren nach einem der vorangehenden Ansprüche, **dadurch gekennzeichnet, dass** der Flusskontrollmechanismus das Angeben einer Fenstergröße umfasst, und wobei das Verfahren implementiert wird, wenn die Fenstergröße geringer als ein Schwellenwert ist.

**7.** Verfahren nach Anspruch 6, **dadurch gekennzeichnet, dass** die Fenstergröße eine Empfangsfenstergröße ist,

**8.** Verfahren nach einem der Ansprüche 1 bis 5, ferner umfassend die Schritte:

vor dem Bestimmungsschritt Evaluieren zur Verfügung stehender Netzwerkkapazität;
Berechnen einer neuen Empfangsfenstergröße für ein nachfolgendes Zeitintervall anhand der zur Verfügung stehenden Netzwerkkapazität; und
falls die neue Empfangsfenstergröße geringer als ein Schwellenwert ist, Durchführen der Schritte des Bestimmens und Lesens; und
falls die neue Empfangsfenstergröße größer als eine Schwellenwertgröße ist, Setzen eines Empfangsfensters für ein nachfolgendes Zeitintervall gleich der neuen Empfangsfenstergröße.

**9.** Verfahren nach einem der Ansprüche 6 bis 8, **dadurch gekennzeichnet, dass** die Schwellenwertgröße gleich der zweifachen maximalen Segmentgröße ist.

**10.** Ein oder mehrere vorrichtungslesbare Medien mit Vorrichtungs-ausführbaren Befehlen zum Durchführen von Schritten, umfassend:

Einholen von Stauungsinformation bezüglich eines Netzwerks (100);
**gekennzeichnet durch**:

anhand der Stauungsinformation Bestimmen einer Zielmenge von Daten, die in einem Zeitintervall aus einem Puffer gelesen werden sollen, der mit Übertragungen niedriger Priorität, im folgenden als Hintergrundübertragungen (104) bezeichnet, an einem Empfangsknoten (102) verbunden ist, der mit dem Netzwerk verbunden ist; und
Lesen bis zu einem Maximum der Zielmenge von Daten aus dem Puffer in dem Zeitintervall, wobei das Netzwerk einen Flusskontrollmechanismus betreibt, und die Daten mit einer Hintergrundübertragung verbunden sind; und
wobei der Schritt des Bestimmens der Zielmenge von Daten, die gelesen werden sollen, ferner umfasst:

Bestimmen, ob die Stauungsinformation eine Abnahme von Stauung gegenüber einer Vielzahl von vorherigen Zeitintervallen anzeigt; und
falls die Bestimmung wahr ist, Erhöhen der Rate des Erhöhens der Zielmenge von Daten, die in einem Zeitintervall gelesen werden sollen, verglichen mit einem vorherigen Zeitintervall.

**11.** Ein oder mehrere vorrichtungslesbare Medien mit Vorrichtungs-ausführbaren Befehlen nach Anspruch 10, **dadurch gekennzeichnet, dass** die Schritte ferner umfassend:

Wiederholen der Schritte für aufeinanderfolgende Zeitintervalle.

**12.** Ein oder mehrere vorrichtungslesbare Medien mit Vorrichtungs-ausführbaren Befehlen nach einem der Ansprüche 10 oder 11, **dadurch gekennzeichnet, dass** die Stauungsinformation Roundtrip-Zeit und/oder ausdrückliche Stauungsbenachrichtigung oder zur Verfügung stehende Netzwerkkapazität umfasst.

**13.** Ein oder mehrere vorrichtungslesbare Medien mit Vorrichtungs-ausführbaren Befehlen nach Ansprüchen 10 bis 12, **dadurch gekennzeichnet, dass** der Schritt des Bestimmens der Zielmenge von Daten, die gelesen werden sollen, umfasst:

falls die Stauungsinformation eine Abnahme von Stauung im Netzwerk anzeigt, Erhöhen der Zielmenge von Daten, die in einem Zeitintervall gelesen werden sollen, verglichen mit einem vorherigen Zeitintervall; und
falls die Stauungsinformation ein Ansteigen von Stauung in dem Netzwerk anzeigt, Absenken der Zielmenge von Daten, die in einem Zeitintervall gelesen werden sollen, verglichen mit einem vorherigen Zeitintervall.

**14.** Ein oder mehrere vorrichtungslesbare Medien mit Vorrichtungs-ausführbaren Befehlen nach einem der Ansprüche 10 bis 13, **dadurch gekennzeichnet, dass** die Schritte ferner umfassen:

vor dem Lesen der Menge von Daten aus dem Puffer in dem Zeitintervall Bestätigen, dass der Flusskontrollmechanismus die Übertragung ausgesetzt hat.

**15.** Eine Empfangsvorrichtung, die zum Steuern einer Übertragung geringer Priorität, im folgenden als Hintergrundübertragung (102) bezeichnet, gestaltet ist, umfassend:

einen Puffer, der mit den Hintergrundübertragungen (104) verbunden ist;
einen Prozessor, der gestaltet ist, um Stauungsinformation bezüglich eines Netzwerks (100) einzuholen und anhand der Stauungsinformation eine Zielmenge von Daten zu bestimmen, die in einem Zeitintervall aus dem Puffer gelesen werden sollen;
und einen Empfänger (105), der gestaltet ist, bis zu einem Maximum der Zielmenge von Daten aus dem Puffer in dem Zeitintervall zu lesen, wobei die Daten mit einer Übertragung verbunden sind und das Netzwerk einen Flusskontrollmechanismus betreibt;
wobei zur Bestimmung der Zielmenge von Daten die Vorrichtung eingerichtet ist, um:

falls die Stauungsinformation eine Abnahme von Stauung in dem Netzwerk anzeigt, die Zielmenge von Daten, die in einem Zeitintervall gelesen werden sollen, verglichen mit einem vorherigen Zeitintervall, zu erhöhen; und
falls die Stauungsinformation ein Ansteigen von Stauung in dem Netzwerk anzeigt, die Zielmenge von Daten, die in einem Zeitintervall gelesen werden sollen, verglichen mit einem vorherigen Zeitintervall, zu verringern.

**16.** Fmpfangsvorrichtung nach Anspruch 15, **dadurch gekennzeichnet, dass** sowohl der Prozessor als auch der Empfänger gestaltet sind, ihre Schritte für aufeinanderfolgende Zeitintervalle zu wiederholen.


**Revendications**

**1.** Procédé de commande de transferts de faible priorité, appelés ci-après transferts de données de fond, dans un réseau (100), comprenant l'étape consistant à :

- obtenir des informations d'encombrement relatives au réseau ;
- et **caractérisé par** les étapes consistant à :
- déterminer une quantité cible de données à lire dans un intervalle de temps depuis un tampon associé aux transferts de données de fond (104) d'un noeud récepteur (102) connecté au réseau, en se fondant sur les informations d'encombrement ; et
- lire au maximum la quantité cible de données depuis le tampon dans l'intervalle de temps, les données étant associées au transfert et le réseau mettant en oeuvre un mécanisme de contrôle de flux ; et
- l'étape de détermination de la quantité cible de données à lire comprenant l'étape consistant à :
- si les informations d'encombrement indiquent une décroissance de l'encombrement dans le réseau, augmenter la quantité cible de données à lire dans un intervalle de temps, en comparaison avec un intervalle de temps antérieur ; et
- si les informations d'encombrement indiquent une croissance de l'encombrement dans le réseau, diminuer la quantité cible de données à lire dans un intervalle de temps, en comparaison avec un intervalle de temps antérieur.

**2.** Procédé selon la revendication 1, pour lequel le procédé est répété pour des intervalles de temps successifs.

**3.** Procédé selon l'une quelconque des revendications précédentes, pour lequel les informations d'encombrement comprennent au moins un critère parmi : le temps d'aller et retour, une notification explicite d'encombrement et la capacité disponible du réseau.

**4.** Procédé selon une quelconque revendication précédente, pour lequel l'étape de détermination de la quantité cible de données à lire comprend en outre les étapes consistant à :

- déterminer si les informations d'encombrement indiquent une décroissance de l'encombrement sur une pluralité d'intervalles de temps antérieurs ; et
- si cette détermination est vraie, augmenter le taux d'accroissement de la quantité cible de données à lire dans un intervalle de temps, en comparaison avec un intervalle de temps antérieur.

5. Procédé selon l'une quelconque des revendications précédentes, comprenant en outre l'étape consistant à :

- avant la lecture de la quantité de données depuis le tampon dans l'intervalle de temps, confirmer que le mécanisme de contrôle de flux a suspendu le transfert.

6. Procédé selon l'une quelconque des revendications précédentes, pour lequel le mécanisme de contrôle de flux comprend l'étape consistant à annoncer une taille de fenêtre et pour lequel le procédé est mis en oeuvre lorsque la taille de fenêtre est inférieure à un seuil de taille.

7. Procédé selon la revendication 6, pour lequel la taille de fenêtre est une taille de fenêtre de réception.

8. Procédé selon l'une quelconque des revendications 1 à 5, comprenant en outre les étapes consistant à :

- avant l'étape de détermination, évaluer la capacité disponible du réseau ;
- calculer une nouvelle taille de fenêtre de réception pour un intervalle de temps ultérieur en se fondant sur la capacité disponible du réseau ; et
- si la nouvelle taille de fenêtre de réception est inférieure à un seuil de taille, exécuter les étapes de détermination et de lecture ; et
- si la nouvelle taille de fenêtre de réception est supérieure à un seuil de taille, instaurer une fenêtre de réception pour un intervalle de temps ultérieur d'une taille égale à la nouvelle taille de fenêtre de réception.

9. Procédé selon l'une quelconque des revendications 6 à 8, pour lequel le seuil de taille est égal à deux fois la Taille Maximale de Segment.

10. Support unique ou multiple, lisible par un dispositif avec des instructions exécutables par un dispositif, pour effectuer des étapes de traitement comprenant l'étape consistant à :

- obtenir des informations d'encombrement relatives à un réseau (100) ;
- et **caractérisé par** les étapes consistant à :
- déterminer une quantité cible de données à lire dans un intervalle de temps depuis un tampon associé à des transferts de faible priorité, appelés ci-après transferts de données de fond (104), d'un noeud récepteur (102) connecté au réseau, en se fondant sur les informations d'encombrement ; et
- lire au maximum la quantité cible de données depuis le tampon dans l'intervalle de temps, le réseau mettant en oeuvre un mécanisme de contrôle de flux et les données étant associées à un transfert de données de fond ; et
- l'étape de détermination de la quantité cible de données à lire comprenant en outre les étapes consistant à :
- déterminer si les informations d'encombrement indiquent une décroissance de l'encombrement sur une pluralité d'intervalles de temps antérieurs ; et
- si cette détermination est vraie, augmenter le taux d'accroissement de la quantité cible de données à lire dans un intervalle de temps, en comparaison avec un intervalle de temps antérieur.

11. Support unique ou multiple, lisible par un dispositif avec des instructions exécutables par un dispositif, selon la revendication 10, pour lequel les étapes de traitement comprennent en outre l'étape consistant à :

- répéter les étapes pour des intervalles de temps successifs.

12. Support unique ou multiple, lisible par un dispositif avec des instructions exécutables par un dispositif, selon l'une quelconque des revendications 10 ou 11, pour lequel les informations d'encombrement comprennent au moins un critère parmi : le temps d'aller et retour, une notification explicite d'encombrement et la capacité disponible du réseau.

13. Support unique ou multiple, lisible par un dispositif avec des instructions exécutables par un dispositif, selon les revendications 10 à 12, pour lequel l'étape de détermination de la quantité cible de données à lire comprend l'étape consistant à :

- si les informations d'encombrement indiquent une décroissance de l'encombrement dans le réseau, augmenter la quantité cible de données à lire dans un intervalle de temps, en comparaison avec un intervalle de temps antérieur ; et

- si les informations d'encombrement indiquent une croissance de l'encombrement dans le réseau, diminuer la quantité cible de données à lire dans un intervalle de temps, en comparaison avec un intervalle de temps antérieur.

**14.** Support unique ou multiple, lisible par un dispositif avec des instructions exécutables par un dispositif, selon l'une quelconque des revendications 10 à 13, pour lequel les étapes de traitement comprennent en outre l'étape consistant à :

- avant la lecture de la quantité de données depuis le tampon dans l'intervalle de temps, confirmer que le mécanisme de contrôle de flux a suspendu le transfert.

**15.** Appareil récepteur adapté à commander un transfert de faible priorité, appelé ci-après transfert de données de fond (102), comprenant :

- un tampon associé aux transferts de données de fond (104) ;
- un processeur agencé pour obtenir des informations d'encombrement relatives à un réseau (100) et déterminer une quantité cible de données à lire dans un intervalle de temps depuis le tampon en se fondant sur les informations d'encombrement ;
- et un récepteur (105) agencé pour lire au maximum la quantité cible de données depuis le tampon dans l'intervalle de temps, les données étant associées à un transfert et le réseau mettant en oeuvre un mécanisme de contrôle de flux ;
- pour la détermination de la quantité cible de données à lire l'appareil étant agencé pour :
- si les informations d'encombrement indiquent une décroissance de l'encombrement dans le réseau, augmenter la quantité cible de données à lire dans un intervalle de temps, en comparaison avec un intervalle de temps antérieur ; et
- si les informations d'encombrement indiquent une croissance de l'encombrement dans le réseau, diminuer la quantité cible de données à lire dans un intervalle de temps, en comparaison avec un intervalle de temps antérieur.

**16.** Appareil récepteur selon la revendication 15, dans lequel le processeur et le récepteur sont tous deux agencés pour répéter leurs traitements pour des intervalles de temps successifs.

FIG. 1

Obtain congestion
information
201

Set amount of data
to receive in next
interval, based on
congestion
information
202

Read amount of
data from buffer in
interval
203

FIG. 2

301

| a | b | c | d | e | f |

302

a, b, c ← | d | e | f |  |  |  |

303

| d | e | f | g | h | i | ← g, h, i

304

d, e ← | f | g | h | i |  |  |

305

| f | g | h | i | j | k | ← j, k

306

f ← | g | h | i | j | k |  |

FIG. 3

From
FIG. 5

Initialize RTT estimate, Set FastStart=F

**401**

RTT<minRTT?
**402**

**403**

True → Adjust MinRTT

**405**
False

Set: Increase =F, FastStart=F

Set: Increase =T
**404**

False ← FastStart=T?
**406**
→ True

Set: **407**
Ymax=Ymax*2

Ymax-Ymin>GY
& Increase=T?
**408**

True → Set: **409**
Ymin=Yn

Ymax-Ymin>GY
& Increase=F?
**410**

True → Set: **411**
Ymax=Yn

True → Set: **413**
Ymax=Ymax+2GY,
FastStart=T

Ymax-Ymin<=GY
& Increase=T?
**412**

Set: Ymin=GY, **415**
Ymax=max(Ymax-GY,GY)

True

Ymax-Ymin<=GY
& Increase=F?
**414**

FIG. 4

FIG. 5

From
FIG. 4

Set:
Yn=(Ymin+Ymax)/2          416

Set:
Target=Yn*Interval          417

Check transmission
paused          418

Read buffers, permitting
transmission          419

Interval
expired?          420

True

Target volume
achieved?          421

True          False

To FIG.
4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002010775 A

- US 10676772 B

**Non-patent literature cited in the description**

- **G. Hasegawa et al.** Receiver Based Management Scheme of Access Link Resources for QoS Controllable TCP Connections. *Proceedings of SoftCom,* 2004, vol. 10, 1-5
- Automatic TCP Buffer tuning. *Computer Communication Reviews,* October 1998, vol. 24 (8

- **P. Key et al.** Emulating Low Priority Transport at the Application Layer: A Background Transfer Service. *Sigmetrics Performance,* 2004, vol. 06, 118-129